# EUROPÄISCHE PATENTSCHRIFT

(11) **EP 3 896 270 B1**
(45) Veröffentlichungstag und Bekanntmachung des Hinweises auf die Patenterteilung: **01.05.2024**
(21) Anmeldenummer: 21163467.0
(22) Anmeldetag: 18.03.2021
(51) Int. Cl.: F02D 41/00, F02D 37/02, F02P 9/00, F02D 29/06

(54) **BRENNKRAFTMASCHINE**
COMBUSTION ENGINE
MOTEUR À COMBUSTION INTERNE

(30) Priorität: 15.04.2020 DE 202020102062 U
(43) Veröffentlichungstag der Anmeldung: 20.10.2021
(73) Patentinhaber: Innio Jenbacher GmbH & Co OG, 6200 Jenbach (AT)
(72) Erfinder: HUBER, Johannes, 6233 Kramsach (AT); KELLER, Tobias, 6020 Innsbruck (AT); THALHAUSER, Josef, 83191 Nußdorf (DE); KOEBERL, Stefan, 6094 Axams (AT)
(74) Vertreter: Torggler & Hofmann Patentanwälte - Innsbruck

(56) Entgegenhaltungen:
- EP-A2- 1 225 321
- EP-B1- 2 526 279
- WO-A1-2018/093389
- US-A1- 2019 242 309
- US-B2- 10 305 404

## Beschreibung

Die vorliegende Erfindung betrifft eine in Zyklen arbeitende Brennkraftmaschine mit den Merkmalen des Oberbegriffs des Anspruchs 1 und ein Genset mit einer solchen Brennkraftmaschine.

Bei Brennkraftmaschinen muss die Leistung der Maschine mittels einer Motorsteuerung gesteuert oder geregelt werden. Insbesondere bei stationären Brennkraftmaschinen ist es oft unerwünscht, die Leistung durch Betätigung eines Aktuators in Form eines Schließens einer Drosselklappe zu ändern, weil dies die Effizienz der Brennkraftmaschine senken kann. Deshalb werden Steuer- oder Regelkonzepte implementiert, bei denen einzelne, mehrere oder alle Zündvorrichtungen der Kolben-Zylinder-Einheiten einer Brennkraftmaschine zeitweise deaktiviert, d.h. nicht gezündet werden. Dies ist unter dem Ausdruck "Skip Firing" bekannt. Insbesondere für den stationären Betrieb einer Brennkraftmaschine werden in der EP 2 952 712 A1 und der EP 2 955 355 A1 Abschaltmuster offenbart, die einen thermisch homogenen Zustand der Brennkraftmaschine befördern sollen.

Die US 2019/0242309 A1 und die WO 2018/093389 A1 offenbaren ein Verfahren zum Betreiben einer gemischaufgeladenen Brennkraftmaschine, wobei "Skip Firing" zum Einsatz kommen soll, wenn Lastabwürfe auftreten.

Die US 10305404 B2 offenbart ein Verfahren zum Betreiben eines Gensets, wobei während eines Zustands des versorgten Netzes, in welchem zeitweise geringe Spannung herrscht, ein Trennen des Generators vom Netz vermieden werden soll ("low voltage ride through", LVRT).

Unter gemischaufgeladenen Brennkraftmaschinen werden solche Maschinen verstanden, bei denen ein Gas-Luft-Gemisch in die Brennkammern der Kolben-Zylinder-Einheiten (mit oder ohne Einsatz eines Turboladers) eingebracht wird, statt einer separaten Zuführung von Treibstoff und Luft. Unter Gas wird in der vorliegenden Offenbarung ein gasförmiger Kraftstoff (auch als Treibgas bezeichnet), beispielsweise Erdgas, verstanden.

Unter Lastabwürfen werden im Rahmen der vorliegenden Offenbarung Ereignisse verstanden, bei denen ein relativ großer Anteil der Leistungsanforderung an die Brennkraftmaschine über einen kurzen Zeitraum wegfällt.

Beispielsweise entspricht ein Lastabwurf im drehzahl-geregelten Betrieb in einem Inselnetz oder beim Übergang in den Leerlaufbetrieb einer Reduktion der elektrischen Last am Generator und einer einhergehenden schnellen Reduktion des Lastmoments an der Kurbelwelle. Aufgrund des weiterhin bestehenden Antriebsmoments führt dies zu einem Anstieg der Drehzahl der Kurbelwelle und aller verbundenen rotierenden Teile. Um die Drehzahl innerhalb von gewünschten zulässigen Grenzen zu halten, muss eine möglichst schnelle Reaktion mit allen zur Verfügung stehenden Aktuatoren der Verbrennungskraftmaschine erfolgen, welche das Antriebsmoment reduzieren können. Neben einer günstigen Beeinflussung von Ladedruck, Kraftstoff-LuftVerhältnis und Zündzeitpunkt, ist die Skip Firing Methode eine effektive Maßnahme, um schnell das Antriebsmoment zu reduzieren.

Probleme mit Skip Firing können bei gemischaufgeladenen Brennkraftmaschinen im Rahmen von sogenannten Lastabwürfe auftreten, denn bei gemischaufgeladenen Brennkraftmaschinen kann die Zufuhr von Treibstoff nicht Brennkammer-individuell abgeschaltet werden. Fällt nun bei einem Lastabwurf ein großer Anteil der Leistungsanforderung weg, müssen dementsprechend viele Kolben-Zylinder-Einheiten ungezündet bleiben.

Dies führt zunächst dazu, dass Gas-Luft-Gemisch auch in die Brennkammern von jenen Kolben-Zylinder-Einheiten gelangt, die im Rahmen des Skip Firing nicht durch die zugeordnete Zündvorrichtung gezündet werden. In weiterer Folge gelangt unverbranntes Gas-Luft-Gemisch in den Ablasstrakt und es kann entweder noch in der Brennkammer oder in Teilen des Ablasstrakts zu unkontrollierter Verbrennung des Gas-Luft-Gemisches kommen, was selbstverständlich schädlich ist. Eine weitere potenzielle negative Folge kann sein, dass das Gas-Luft-Gemisch in einen im Ablasstrakt angeordneten Katalysator gelangt und diesen beschädigt oder verlegt. Bei Lastabwürfen treten diese negativen Folgen mit höherer Wahrscheinlichkeit und Häufigkeit auf, sodass die Gefahr einer Beschädigung der Maschine durch Skip Firing bei Lastabwürfen besonders hoch ist.

Lastabwürfe können beispielsweise bei Brennkraftmaschinen auftreten, die mittels ihrer Kurbelwelle einen elektrischen Generator zum Erzeugen elektrischer Energie antreiben. Eine solche Anordnung wird auch als "Genset" bezeichnet.

Aufgabe der vorliegenden Erfindung ist es, beim Einsatz von Skip Firing zum Kompensieren von Lastabwürfen bei gemischaufgeladenen Brennkraftmaschinen das Risiko einer unkontrollierten Verbrennung von Gas-Luft-Gemisch in den Brennräumen und/oder im Ablasstrakt einer gattungsgemäßen Brennkraftmaschine und eines gattungsgemäßen Gensets zu verringern.

Diese Aufgabe wird durch eine in Zyklen arbeitende Brennkraftmaschine mit den Merkmalen des Anspruchs 1 und ein Genset mit einer solchen Brennkraftmaschine gelöst. Vorteilhafte Weiterbildungen der Erfindung sind in den abhängigen Ansprüchen definiert.

Eine erfindungsgemäße Brennkraftmaschine weist auf:
- eine Vielzahl von Kolben-Zylinder-Einheiten, wobei jeder Kolben-Zylinder-Einheit der Vielzahl von Kolben-Zylinder-Einheiten eine Zündvorrichtung zugeordnet ist, welche hinsichtlich Aktivierung und Wahl eines Zündzeitpunkts durch eine Motorsteuerung steuerbar ist, wobei eine Kolben-Zylinder-Einheit bei aktivierter Zündvorrichtung durch Verbrennung eines Gas-Luft-Gemisches eine Leistung erbringt, welche als Drehmoment an eine Kurbelwelle der Brennkraftmaschine übertragbar ist
- einen Einlasstrakt und einen Auslasstrakt, die jeweils mit der Vielzahl von Kolben-Zylinder-Einheiten gekoppelt sind
- eine Zuführvorrichtung zur Zufuhr eines unter einem Ladedruck stehenden Gas-Luft-Gemisches zum Einlasstrakt
- eine Signalerfassungsvorrichtung zum Erfassen wenigstens eines Signals, welches eine Leistungsanforderung an die Brennkraftmaschine repräsentiert oder aus welchem eine Leistungsanforderung an die Brennkraftmaschine berechenbar ist
- eine Motorsteuerung zur Ansteuerung von Aktuatoren der Brennkraftmaschine, wobei der Motorsteuerung das wenigstens eine Signal zuführbar ist und die Motorsteuerung in einem ersten Betriebsmodus dazu konfiguriert ist, in Abhängigkeit der momentan vorliegenden Leistungsanforderung pro Zyklus der Brennkraftmaschine so viele Zündvorrichtungen deaktiviert zu lassen, dass sich durch die Leistung jener Kolben-Zylinder-Einheiten, deren Zündvorrichtungen aktiviert sind, ein an die momentan vorliegende Leistungsanforderung angepasstes Drehmoment der Kurbelwelle der Brennkraftmaschine ergibt
- eine Motorsteuerung, die dazu konfiguriert ist, in einem zweiten Betriebsmodus zur Reduktion eines Verpuffungsrisikos aufgrund sich im Auslasstrakt befindenden unverbrannten Gas-Luft-Gemisches
   - nach einer ersten Anzahl von Zyklen der Brennkraftmaschine für eine zweite Anzahl von Zyklen der Brennkraftmaschine pro Zyklus mehr Kolben-Zylinder-Einheiten durch Aktivierung der zugeordneten Zündvorrichtungen Leistung erbringen zu lassen, als bei der momentan vorliegenden Leistungsanforderung erforderlich wäre
   - nach der zweiten Anzahl von Zyklen der Brennkraftmaschine für eine dritte Anzahl von Zyklen der Brennkraftmaschine in Abhängigkeit einer momentan vorliegenden Leistungsanforderung pro Zyklus der Brennkraftmaschine so viele Kolben-Zylinder-Einheiten durch Aktivierung der zugeordneten Zündvorrichtungen Leistung erbringen zu lassen, dass sich ein an die momentan vorliegende Leistungsanforderung angepasstes Drehmoment der Kurbelwelle ergibt

Gemäß der Erfindung ist die Motorsteuerung dazu konfiguriert, im zweiten Betriebsmodus eine Ansteuerung zumindest eines Aktuators zur Reduktion der von einer Kolben-Zylinder-Einheit mit aktivierter Zündvorrichtung erbrachten Leistung vorzunehmen, indem zumindest für wenigstens eine der Kolben-Zylinder-Einheiten mit aktivierter Zündvorrichtung eine Verstellung des Zündzeitpunkts auf spät vorgenommen wird. Beispielsweise kann eine Verstellung des Zündzeitpunkts um einen Wert zwischen 0° und 30°, auf eine resultierende Zündzeitpunkvorgabe zwischen 0° und 20° und bevorzugt zwischen 0° und 10°, vor dem oberen Totpunkt eines Kolbens der betroffenen Kolben-Zylinder-Einheit eingestellt werden.

Bei der Erfindung wird das bei der ersten Anzahl und der dritten Anzahl an Zyklen beim Skip Firing in den Ablasstrakt gelangende unverbrannte Gas-Luft-Gemisch bei der zweiten Anzahl an Zyklen mit Abgas verdünnt, da während der zweiten Anzahl an Zyklen durch (die im Vergleich zur ersten Anzahl an Zyklen) erhöhte Anzahl an aktivierten Zündvorrichtungen mehr Gas-Luft-Gemisch verbrannt und damit mehr Abgas erzeugt wird, welches sich im Ablasstrakt mit dort befindlichem unverbrannten Gas-Luft-Gemisch vermischt, sodass die Wahrscheinlichkeit und Häufigkeit der eingangs erwähnten negativen Folgen einer unkontrollierten Verbrennung reduziert werden. Wie viele und welche Zündvorrichtungen deaktiviert werden sollen, kann die Motorsteuerung in aus dem Stand der Technik bekannter Weise bestimmen.

Wenn während der zweiten Anzahl an Zyklen die Motorsteuerung zumindest einen Aktuator der Brennkraftmaschine zur Reduktion der von einer Kolben-Zylinder-Einheit mit aktivierter Zündvorrichtung erbrachten Leistung ansteuert, besteht ein weiterer Vorteil der Erfindung darin, dass das Klopfrisiko beim Auftreten eines Lastabwurfs reduziert werden kann.

Unter dem Begriff Zyklus einer in Zyklen arbeitenden Brennkraftmaschine wird ein Arbeitsspiel der Brennkraftmaschine verstanden, d. h. im Falle eines Viertaktmotors eine Drehung der Kurbelwelle mit einem Kurbelwellenwinkel von 720° oder im Falle eines Zweitaktmotors eine Drehung der Kurbelwelle mit einem Kurbelwellenwinkel von 360°).

Wie bereits erwähnt, sind Lastabwürfe Ereignisse, bei welchen ein bedeutender Teil der Leistungsanforderung an die Brennkraftmaschine im drehzahl-geregelten Betrieb plötzlich wegfällt. Von Lastabwürfen kann insbesondere gesprochen werden, wenn mehr als 30 %, bevorzugt 100 %, der Leistungsanforderung plötzlich wegfallen.

Wird bei einem Genset die elektrische Energie in ein Energieversorgungsnetz eingespeist und tritt ein Netzfehler auf, kann die Energie nicht mehr ins Netz gespeist werden, was in einer plötzlichen Reduktion der Leistungsanforderung an die Brennkraftmaschine resultiert. Ein anderer Fall kann im sogenannten Inselbetrieb eintreten, wenn die elektrische Energie nicht in ein Energieversorgungsnetz eingespeist wird, sondern direkt zum Antreiben einzelner oder weniger Abnehmer (bspw. Pumpen usw.) verwendet wird. Beim plötzlichen Abschalten eines oder mehrerer der Abnehmer tritt dann ein Lastabwurf auf.

Die Zündvorrichtungen der einzelnen Kolben-Zylinder-Einheiten können eine in einen Brennraum der Kolben-Zylinder-Einheit hineinragende Zündkerze beinhalten. Weisen die Kolben-Zylinder-Einheiten eine Vorkammer und einen mit der Vorkammer verbundenen Hauptbrennraum auf, kann die Zündkerze in der Vorkammer angeordnet sein.

Wie bereits erwähnt, betrifft die Erfindung Brennkraftmaschinen, die eine mit dem Einlasstrakt gekoppelte Zuführvorrichtung zum gemeinsamen Zuführen von Gas und Luft beinhalten (gemischaufgeladene Brennkraftmaschinen). Meist kommt dafür eine Mischeinrichtung zum Mischen von Gas und Luft zum Einsatz.

Unter dem Aussetzen eines Zündereignisses wird natürlich verstanden, dass die einer Kolben-Zylinder-Einheit zugeordnete Zündvorrichtung nicht aktiviert wird oder deaktiviert wird, während sich Gas-Luft-Gemisch in der Brennkammer befindet und daher ein Zünden des Gas-Luft-Gemisches an und für sich notwendig wäre, damit die Kolben-Zylinder-Einheit Leistung erbringt.

Bei einem Ausführungsbeispiel der Erfindung ist die Motorsteuerung dazu konfiguriert, bei Erfüllung eines vorgegebenen ersten Kriteriums - bevorzugt bei Auftreten einer einen vorgegebenen Grenzwert überschreitenden Reduktion der Leistungsanforderung (und/oder deren Änderungsrate) - vom ersten Betriebsmodus in den zweiten Betriebsmodus zu wechseln. Dabei ist vorzugsweise vorgesehen, dass die Motorsteuerung dazu konfiguriert ist, in Abhängigkeit der Erfüllung eines vorgebbaren zweiten Kriteriums vom zweiten Betriebsmodus in den ersten Betriebsmodus zu wechseln.

Das erste Kriterium kann beispielsweise eine Anzahl der Kolben-Zylinder-Einheiten mit deaktivierter Zündvorrichtung und/oder eine Dauer des Skip Firing sein. Je größer die Anzahl an Kolben-Zylinder-Einheiten mit deaktivierter Zündvorrichtung ist und je mehr Zyklen das Skip Firing andauert, desto größer ist das Risiko einer unkontrollierten Verbrennung von Gas-Luft-Gemisch im Auslasstrakt.

Das zweite Kriterium kann eine vorgegebene Anzahl von Wiederholungen der ersten, zweiten und dritten Anzahl von Zyklen der Brennkraftmaschine sein und/oder eine Erhöhung der Leistungsanforderung (und/oder deren Änderungsrate) - entweder unmittelbar gemessen oder indirekt erschlossen (z. B. über die Drehzahl(-änderung)) um ein vorgegebenes Ausmaß.

Bei einem Ausführungsbeispiel der Erfindung ist die Motorsteuerung dazu konfiguriert, im zweiten Betriebsmodus die Abfolge von erster Anzahl, zweiter Anzahl und dritter Anzahl von Zyklen der Brennkraftmaschine zu wiederholen, beispielsweise bis das im vorigen Absatz diskutierte zweite Kriterium erfüllt ist.

Bei einem Ausführungsbeispiel der Erfindung ist die Motorsteuerung dazu konfiguriert, im zweiten Betriebsmodus eine Ansteuerung zumindest eines Aktuators zur Reduktion der von einer Kolben-Zylinder-Einheit mit aktivierter Zündvorrichtung erbrachten Leistung vorzunehmen, bevorzugt indem der Ladedruck im Einlasstrakt gesenkt wird. Dies geschieht vorzugsweise durch einen Aktuator:
- in Form einer im oder vor dem Einlasstrakt angeordneten Drosselklappe, wobei vorzugsweise ein ladedruckabhängiger Grenzwert für eine minimale Schließstellung der Drosselklappe vorgesehen ist und vorgesehen ist, die Drosselklappe so anzusteuern, dass eine Schließstellung der Drosselklappe am oder oberhalb des Grenzwerts verbleibt, und/oder
- in Form eines Umblaseventils eines im oder vor dem Einlasstrakt angeordneten Turboladers

Der ladedruckabhängige Grenzwert für eine minimale Schließstellung der Drosselklappe dient der Vermeidung von Verdichter-Pumpen während des Lastabwurfes.

Bei einem Ausführungsbeispiel der Erfindung ist die Motorsteuerung dazu konfiguriert, im zweiten Betriebsmodus für die dritte Anzahl von Zyklen der Brennkraftmaschine keine Reduktion der von einer Kolben-Zylinder-Einheit mit aktivierter Zündvorrichtung erbrachten Leistung vorzunehmen. Bei diesem Ausführungsbeispiel wird also die Leistung der Leistung erbringenden Kolben-Zylinder-Einheiten bei der ersten und der dritten Anzahl von Zyklen der Brennkraftmaschine nicht reduziert.

Es kann bei allen Ausführungsbeispielen der Erfindung vorgesehen sein, dass
- die dritte Anzahl der Zyklen der Brennkraftmaschine gleich der ersten Anzahl von Zyklen der Brennkraftmaschine ist und/oder
- die zweite Anzahl der Zyklen der Brennkraftmaschine kleiner der ersten Anzahl und/oder der dritten Anzahl von Zyklen der Brennkraftmaschine ist

Beispielsweise kann die erste Anzahl gleich der dritten Anzahl gleich Drei sein und die zweite Anzahl kann gleich Eins sein. Dabei ist besonders bevorzugt vorgesehen, bei dem einen Zyklus der zweiten Anzahl alle Zündvorrichtungen zu betätigen.

Die zweite Anzahl sollte stets größer Null, die erste Anzahl und/oder die dritte Anzahl könnten gleich Null gewählt sein.

Bei einem Ausführungsbeispiel der Erfindung ist vorgesehen, dass die erste Anzahl von Zyklen der Brennkraftmaschine und/oder die zweite Anzahl von Zyklen der Brennkraftmaschine und/oder die dritte Anzahl von Zyklen der Brennkraftmaschine von dem wenigstens einen Signal der Signalerfassungsvorrichtung abhängig sind.

Bei einem Ausführungsbeispiel der Erfindung ist die Motorsteuerung dazu konfiguriert, im zweiten Betriebsmodus für die zweite Anzahl von Zyklen der Brennkraftmaschine:
- alle Zündvorrichtungen zu aktivieren und/oder
- für eine Vielzahl, vorzugsweise für alle, der Kolben-Zylinder-Einheiten mit aktivierter Zündvorrichtung eine Verstellung des Zündzeitpunkts auf spät vorzunehmen

Bei allen Ausführungsbeispielen der Erfindung kann vorgesehen sein, dass das wenigstens eine Signal der Signalerfassungsvorrichtung ein eine Drehzahl der Kurbelwelle repräsentierendes Drehzahlsignal ist.

Beispielsweise kann die Signalerfassungsvorrichtung ein Drehzahlgeber sein, welcher eine Drehzahl der Kurbelwelle misst. Die Drehzahl der Kurbelwelle kann aber auch wie im Stand der Technik bekannt indirekt bestimmt werden.

Ein Ausführungsbeispiel der Erfindung wird anhand der Figuren diskutiert.
Figur 1 zeigt schematisch eine erfindungsgemäße Brennkraftmaschine.
Figur 2 zeigt schematisch ein erfindungsgemäßes Genset.
Figur 3 zeigt schematisch ein beispielhaftes Vorgehen im Falle eines Lastabwurfs gemäß einem ersten Ausführungsbeispiel.
Figur 4 zeigt schematisch ein beispielhaftes Vorgehen im Falle eines Lastabwurfs gemäß einem zweiten Ausführungsbeispiel.

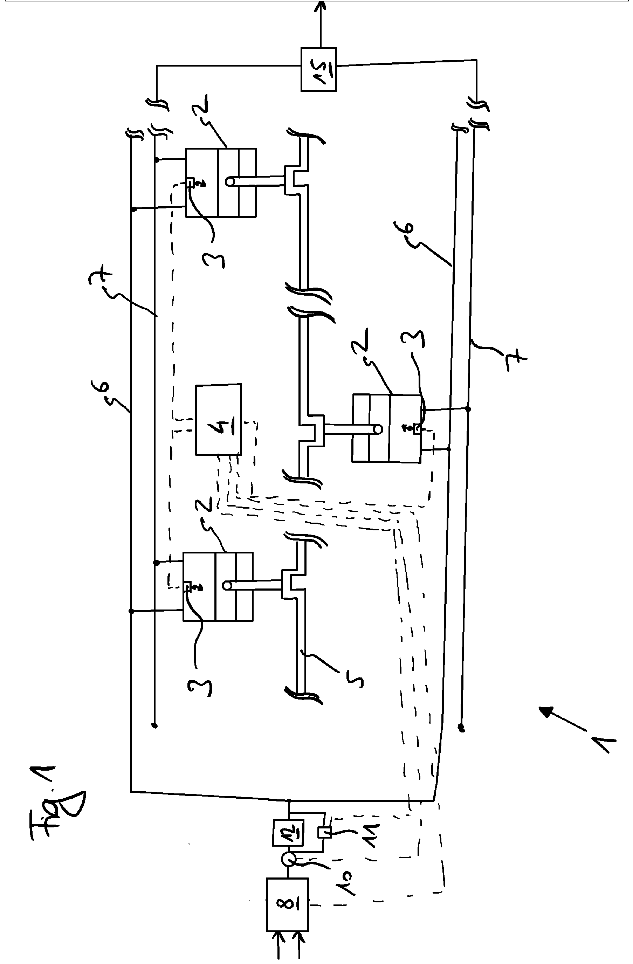

Figur 1 zeigt eine erfindungsgemäße Brennkraftmaschine 1 mit einer Vielzahl von Kolben-Zylinder-Einheiten 2, wobei jeder Kolben-Zylinder-Einheit 2 eine Zündvorrichtung 3 zugeordnet ist, welche hinsichtlich Aktivierung und Wahl eines Zündzeitpunkts durch eine Motorsteuerung 4 steuerbar ist, wobei eine Kolben-Zylinder-Einheit 2 bei aktivierter Zündvorrichtung 3 durch Verbrennung eines Gas-Luft-Gemisches eine Leistung erbringt, welche als Drehmoment an eine Kurbelwelle 5 der Brennkraftmaschine 1 übertragbar ist.

Die Brennkraftmaschine weist weiter auf:
- einen Einlasstrakt 6 und einen Auslasstrakt 7 auf, die jeweils mit der Vielzahl von Kolben-Zylinder-Einheiten 2 gekoppelt sind, wobei im Auslasstrakt 7 ein optionaler Katalysator 15 angeordnet ist
- eine Zuführvorrichtung 8 zur Zufuhr eines unter einem Ladedruck stehenden Gas-Luft-Gemisches zum Einlasstrakt 6
- eine Signalerfassungsvorrichtung 9 zum Erfassen wenigstens eines Signals, welches eine Leistungsanforderung an die Brennkraftmaschine 1 repräsentiert oder aus welchem eine Leistungsanforderung an die Brennkraftmaschine 1 berechenbar ist (hier ist das wenigstens eine Signal der Signalerfassungsvorrichtung 9 ein eine Drehzahl n der Kurbelwelle 5 repräsentierendes Drehzahlsignal)

Die Motorsteuerung 4 dient der Ansteuerung von Aktuatoren der Brennkraftmaschine 1 (im Rahmen eines offenen oder geschlossenen Regelkreises), wobei der Motorsteuerung 4 das wenigstens eine Signal zuführbar ist und die Motorsteuerung 4 in einem ersten Betriebsmodus dazu konfiguriert ist, in Abhängigkeit der momentan vorliegenden Leistungsanforderung pro Zyklus der Brennkraftmaschine 1 so viele Zündvorrichtungen 8 deaktiviert zu lassen, dass sich durch die Leistung jener Kolben-Zylinder-Einheiten 2, deren Zündvorrichtungen 8 aktiviert sind, ein an die momentan vorliegende Leistungsanforderung angepasstes Drehmoment der Kurbelwelle 5 der Brennkraftmaschine 1 ergibt.

Die Motorsteuerung 4 ist weiters dazu konfiguriert, in einem zweiten Betriebsmodus zur Reduktion eines Verpuffungsrisikos aufgrund sich im Auslasstrakt 7 befindenden unverbrannten Gas-Luft-Gemisches
- nach einer ersten Anzahl N₁ von Zyklen der Brennkraftmaschine 1 für eine zweite Anzahl N₂ von Zyklen der Brennkraftmaschine 1 pro Zyklus mehr Kolben-Zylinder-Einheiten 2 durch Aktivierung der zugeordneten Zündvorrichtungen 8 Leistung erbringen zu lassen, als bei der momentan vorliegenden Leistungsanforderung erforderlich wäre und vorzugsweise dabei zumindest einen Aktuator der Brennkraftmaschine 1 zur Reduktion der von einer Kolben-Zylinder-Einheit 2 mit aktivierter Zündvorrichtung 8 erbrachten Leistung anzusteuern
- nach der zweiten Anzahl N₂ von Zyklen der Brennkraftmaschine 1 für eine dritte Anzahl N₃ von Zyklen der Brennkraftmaschine 1 in Abhängigkeit einer momentan vorliegenden Leistungsanforderung pro Zyklus der Brennkraftmaschine 1 so viele Kolben-Zylinder-Einheiten 2 durch Aktivierung der zugeordneten Zündvorrichtungen 8 Leistung erbringen zu lassen, dass sich ein an die momentan vorliegende Leistungsanforderung angepasstes Drehmoment der Kurbelwelle 5 ergibt

Die Motorsteuerung 4 ist weiters dazu konfiguriert, bei Erfüllung eines vorgegebenen ersten Kriteriums - bevorzugt bei Auftreten einer einen vorgegebenen Grenzwert überschreitenden Änderung der Leistungsanforderung und/oder deren Änderungsrate - vom ersten Betriebsmodus in den zweiten Betriebsmodus zu wechseln. Dabei ist vorzugsweise vorgesehen, dass die Motorsteuerung 4 dazu konfiguriert ist, in Abhängigkeit der Erfüllung eines vorgebbaren zweiten Kriteriums vom zweiten Betriebsmodus in den ersten Betriebsmodus zu wechseln.

Die Motorsteuerung 4 ist dazu konfiguriert, im zweiten Betriebsmodus die Abfolge von erster Anzahl N₁, zweiter Anzahl N₂ und dritter Anzahl N₃ von Zyklen der Brennkraftmaschine 1 zu wiederholen.

Die Motorsteuerung 4 ist dazu konfiguriert, im zweiten Betriebsmodus eine Ansteuerung zumindest eines Aktuators zur Reduktion der von einer Kolben-Zylinder-Einheit 2 mit aktivierter Zündvorrichtung 8 erbrachten Leistung vorzunehmen, indem der Ladedruck im Einlasstrakt 6 gesenkt wird, hier durch einen Aktuator:
- in Form einer im oder vor dem Einlasstrakt 6 angeordneten Drosselklappe 10, wobei vorzugsweise ein ladedruckabhängiger Grenzwert für eine minimale Schließstellung der Drosselklappe 10 vorgesehen ist und vorgesehen ist, die Drosselklappe 10 so anzusteuern, dass eine Schließstellung der Drosselklappe 10 am oder oberhalb des Grenzwerts verbleibt, und/oder
- in Form eines Umblaseventils 11 eines im oder vor dem Einlasstrakt 6 angeordneten Turboladers 12

Die Motorsteuerung 4 ist dazu konfiguriert, im zweiten Betriebsmodus eine Ansteuerung zumindest eines Aktuators zur Reduktion der von einer Kolben-Zylinder-Einheit 2 mit aktivierter Zündvorrichtung 8 erbrachten Leistung vorzunehmen, indem zumindest für wenigstens eine der Kolben-Zylinder-Einheiten 2 mit aktivierter Zündvorrichtung 8 eine Verstellung des Zündzeitpunkts auf spät vorgenommen wird.

Die Motorsteuerung 4 ist dazu konfiguriert, im zweiten Betriebsmodus für die dritte Anzahl N₃ von Zyklen der Brennkraftmaschine 1 keine Reduktion der von einer Kolben-Zylinder-Einheit 2 mit aktivierter Zündvorrichtung 8 erbrachten Leistung vorzunehmen.

Die Motorsteuerung 4 ist dazu konfiguriert, im zweiten Betriebsmodus für die zweite Anzahl N₂ von Zyklen der Brennkraftmaschine 1 alle Zündvorrichtungen 8 zu aktivieren und/oder für eine Vielzahl, vorzugsweise für alle, der Kolben-Zylinder-Einheiten 2 mit aktivierter Zündvorrichtung 8 eine Verstellung des Zündzeitpunkts auf spät vorzunehmen.

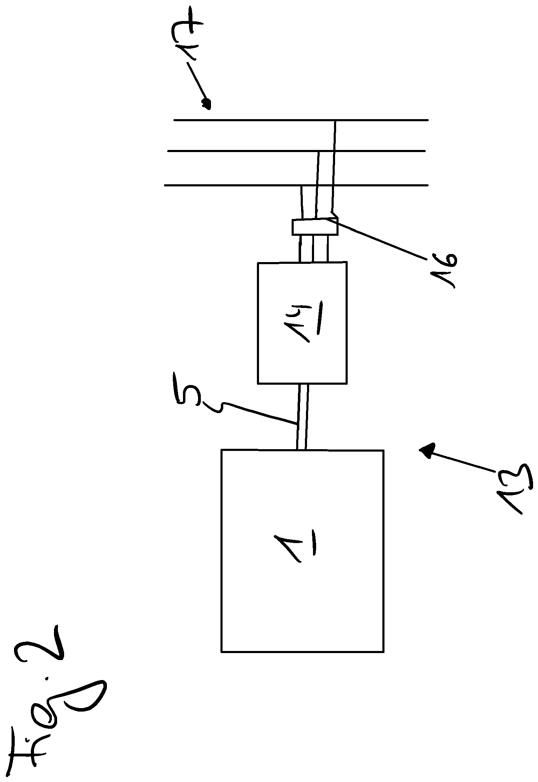

Figur 2 zeigt die Brennkraftmaschine 1 der Figur 1 als Teil eines Gensets 13 mit einem mit der Kurbelwelle 5 der Brennkraftmaschine 1 mechanisch gekoppelten elektrischen Generator 14. Die Leistungsanforderung an die Brennkraftmaschine 1 ergibt sich durch eine mit dem elektrischen Generator 14 über eine Schaltvorrichtung 16 verbindbare oder verbundene Last (hier in Form eines dreiphasigen Energieversorgungsnetzes 17 dargestellt).

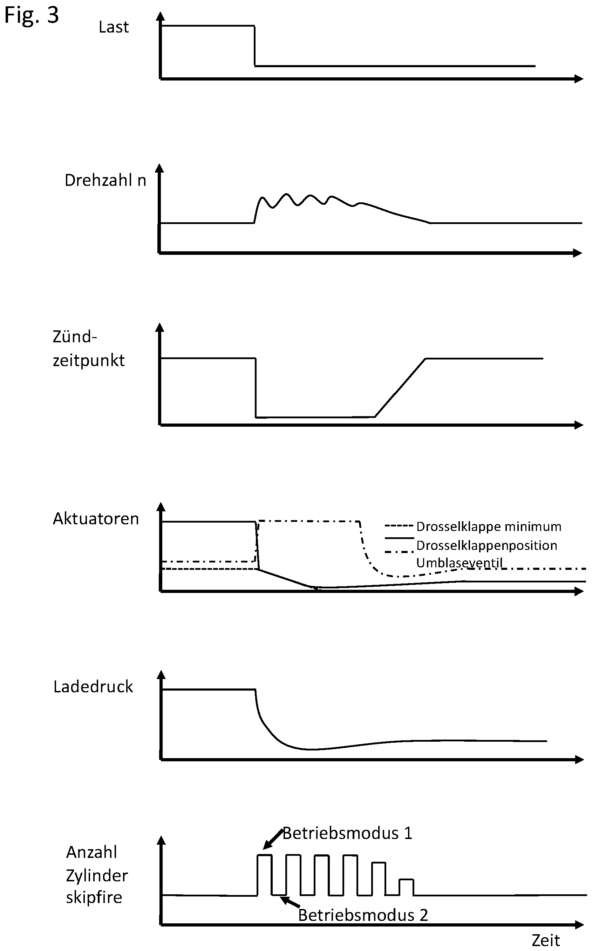

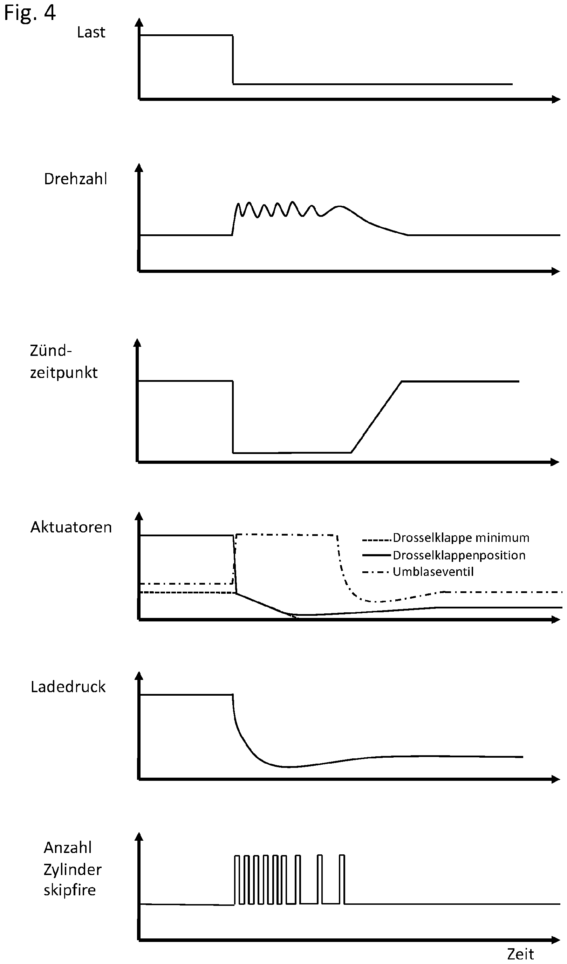

Jene Ereignisse, die in den unterschiedlichen Grafen der Figuren 3 und 4 vertikal betrachtet entlang einer Linie liegen, finden zeitgleich statt.

Figur 3 zeigt, wie bei einem Lastabwurf in einem ersten Ausführungsbeispiel der zweite Betriebsmodus durchgeführt wird.

Im obersten Grafen "Last über Zeit" der Figur 3 liegt zunächst die Leistungsanforderung an die Brennkraftmaschine 1 bei einem bestimmten Niveau und die Motorsteuerung 4 befindet sich im ersten Betriebsmodus, in welchem sie dazu konfiguriert ist, in Abhängigkeit der momentan vorliegenden Leistungsanforderung pro Zyklus der Brennkraftmaschine 1 so viele Zündvorrichtungen 8 deaktiviert zu lassen, dass sich durch die Leistung jener Kolben-Zylinder-Einheiten 2, deren Zündvorrichtungen 8 aktiviert sind, ein an die momentan vorliegende Leistungsanforderung angepasstes Drehmoment der Kurbelwelle 5 der Brennkraftmaschine 1 ergibt. Je nach Leistungsanforderung kann die Anzahl von deaktivierten Zündvorrichtungen 8 gleich Null oder größer Null sein.

Zu einem bestimmten Zeitpunkt bricht die Leistungsanforderung an die Brennkraftmaschine 1 plötzlich zusammen, was sich im Grafen "Last über Zeit" in einer sprunghaften Verringerung der Last zeigt.

Im vorliegenden Ausführungsbeispiel löst das Auftreten der einen vorgegebenen Grenzwert überschreitenden Änderung der Leistungsanforderung (entweder unmittelbar gemessen oder über einen Anstieg der Drehzahl detektiert) einen Wechsel des Betriebsmodus der Motorsteuerung 4 vom ersten Betriebsmodus in den zweiten Betriebsmodus aus.

In diesem zweiten Betriebsmodus wird zunächst für eine Anzahl N₁ von Zyklen eine solche Anzahl von Zündvorrichtungen 8 deaktiviert, dass der Anstieg n der Drehzahl begrenzt wird (dies erzeugt das erste Maximum im Grafen "Drehzahl n über Zeit"). Nach der Anzahl N₁ von Zyklen lässt die Motorsteuerung 4 für eine zweite Anzahl N₂ von Zyklen pro Zyklus mehr Kolben-Zylinder-Einheiten 2 durch Aktivierung der zugeordneten Zündvorrichtungen 8 Leistung erbringen, als bei der momentan vorliegenden Leistungsanforderung erforderlich wäre. Dies resultiert zwar in einem erneuten Anstieg der Drehzahl n, jedoch wird das Risiko einer unkontrollierten Verpuffung gesenkt. Die Anzahl N₃ ist in diesem Ausführungsbeispiel gleich Null gewählt.

Diese Abfolge von N₁ Zyklen und N₂ Zyklen wird hier beispielhaft drei Mal wiederholt. Dann schließen sich zwei Abfolgen von N₁ Zyklen und N₂ Zyklen an, bei denen jeweils während der N₁ Zyklen einer Abfolge weniger Zündvorrichtungen 8 deaktiviert werden als während der N₁ Zyklen der unmittelbar vorangegangen Abfolge. Die Anzahlen N₁ und N₂ der Zyklen ändern sich bei diesem Ausführungsbeispiel nicht. Dann wechselt die Motorsteuerung 4 wieder in den ersten Betriebsmodus.

Die Grafen "Zündzeitpunkt über Zeit", "Aktuatoren über Zeit" und "Ladedruck über Zeit" zeigen optionale flankierende Maßnahmen (diese müssen nicht alle gemeinsam vorgenommen werden, obwohl dies denkbar ist), um eine Ansteuerung zumindest eines Aktuators zur Reduktion der von einer Kolben-Zylinder-Einheit 2 mit aktivierter Zündvorrichtung 8 erbrachten Leistung vorzunehmen, hier eine Verstellung der Zündzeitpunkte auf spät und/oder eine Beeinflussung des Ladedruckes durch eine Veränderung der Position einer Drosselkappe und/oder der Betätigung eines Umblaseventils. Aufgrund der vorgenommenen Absenkung des Ladedruckes kann die Anzahl der deaktivierten Zündvorrichtungen 8 im ersten Betriebsmodus vor und nach den Änderungen der Leistungsanforderung dieselbe sein (nicht zwingend erforderlich), z. B. gleich Null, da ja der geringeren Last durch den abgesenkten Ladedruck Rechnung getragen wird.

Figur 4 zeigt, wie bei einem Lastabwurf in einem zweiten Ausführungsbeispiel der zweite Betriebsmodus durchgeführt wird, wobei hier im Unterschied zum Ausführungsbeispiel der Fig. 3 die Anzahlen N₁ und N₂ der Zyklen nicht zwingend konstant gehalten werden, sondern im Laufe der Zeit verändert werden, z. B. in Abhängigkeit von dem wenigstens einen Signal der Signalerfassungsvorrichtung 9.

### Bezugszeichenliste:

- 1: Brennkraftmaschine
- 2: Kolben-Zylinder-Einheit
- 3: Zündvorrichtung
- 4: Motorsteuerung
- 5: Kurbelwelle
- 6: Einlasstrakt
- 7: Auslasstrakt
- 8: Zuführvorrichtung für Gas-Luft-Gemisch
- 9: Signalerfassungsvorrichtung
- 10: Drosselklappe
- 11: Umblaseventil
- 12: Turbolader
- 13: Genset
- 14: elektrischer Generator
- 15: Katalysator
- 16: Schaltvorrichtung
- 17: Energieversorgungsnetz

- N₁: erste Anzahl von Zyklen
- N₂: zweite Anzahl von Zyklen
- N₃: dritte Anzahl von Zyklen

- n: Drehzahl der Kurbelwelle

## Patentansprüche

1. In Zyklen arbeitende Brennkraftmaschine (1), mit:
- einer Vielzahl von Kolben-Zylinder-Einheiten (2), wobei jeder Kolben-Zylinder-Einheit (2) der Vielzahl von Kolben-Zylinder-Einheiten (2) eine Zündvorrichtung (3) zugeordnet ist, welche hinsichtlich Aktivierung und Wahl eines Zündzeitpunkts durch eine Motorsteuerung (4) steuerbar ist, wobei eine Kolben-Zylinder-Einheit (2) bei aktivierter Zündvorrichtung (3) durch Verbrennung eines Gas-Luft-Gemisches eine Leistung erbringt, welche als Drehmoment an eine Kurbelwelle (5) der Brennkraftmaschine (1) übertragbar ist
- einem Einlasstrakt (6) und einem Auslasstrakt (7), die jeweils mit der Vielzahl von Kolben-Zylinder-Einheiten (2) gekoppelt sind
- einer Zuführvorrichtung (8) zur Zufuhr eines unter einem Ladedruck stehenden Gas-Luft-Gemisches zum Einlasstrakt (6)
- einer Signalerfassungsvorrichtung (9) zum Erfassen wenigstens eines Signals, welches eine Leistungsanforderung an die Brennkraftmaschine (1) repräsentiert oder aus welchem eine Leistungsanforderung an die Brennkraftmaschine (1) berechenbar ist
- einer Motorsteuerung (4) zur Ansteuerung von Aktuatoren der Brennkraftmaschine (1), wobei der Motorsteuerung (4) das wenigstens eine Signal zuführbar ist und die Motorsteuerung (4) in einem ersten Betriebsmodus dazu konfiguriert ist, in Abhängigkeit der momentan vorliegenden Leistungsanforderung für eine erste Anzahl (N1) von Zyklen der Brennkraftmaschine (1) pro Zyklus der Brennkraftmaschine (1) so viele Zündvorrichtungen (8) deaktiviert zu lassen, dass sich durch die Leistung jener Kolben-Zylinder-Einheiten (2), deren Zündvorrichtungen (8) aktiviert sind, ein an die momentan vorliegende Leistungsanforderung angepasstes Drehmoment der Kurbelwelle (5) der Brennkraftmaschine (1) ergibt
**dadurch gekennzeichnet, dass** die Motorsteuerung (4) dazu konfiguriert ist, in einem zweiten Betriebsmodus zur Reduktion eines Verpuffungsrisikos aufgrund sich im Auslasstrakt (7) befindenden unverbrannten Gas-Luft-Gemisches
- nach der ersten Anzahl (N₁) von Zyklen der Brennkraftmaschine (1) für eine zweite Anzahl (N₂) von Zyklen der Brennkraftmaschine (1) pro Zyklus mehr Kolben-Zylinder-Einheiten (2) durch Aktivierung der zugeordneten Zündvorrichtungen (8) Leistung erbringen zu lassen, als bei der momentan vorliegenden Leistungsanforderung erforderlich wäre, wobei die Motorsteuerung (4) dazu konfiguriert ist, im zweiten Betriebsmodus eine Ansteuerung zumindest eines Aktuators zur Reduktion der von einer Kolben-Zylinder-Einheit (2) mit aktivierter Zündvorrichtung (8) erbrachten Leistung vorzunehmen, indem zumindest für wenigstens eine der Kolben-Zylinder-Einheiten (2) mit aktivierter Zündvorrichtung (8) eine Verstellung des Zündzeitpunkts auf spät vorgenommen wird
- nach der zweiten Anzahl (N₂) von Zyklen der Brennkraftmaschine (1) für eine dritte Anzahl (N₃) von Zyklen der Brennkraftmaschine (1) in Abhängigkeit einer momentan vorliegenden Leistungsanforderung pro Zyklus der Brennkraftmaschine (1) so viele Kolben-Zylinder-Einheiten (2) durch Aktivierung der zugeordneten Zündvorrichtungen (8) Leistung erbringen zu lassen, dass sich ein an die momentan vorliegende Leistungsanforderung angepasstes Drehmoment der Kurbelwelle (5) ergibt.

2. Brennkraftmaschine nach dem vorangehenden Anspruch, wobei die Motorsteuerung (4) dazu konfiguriert ist, bei Erfüllung eines vorgegebenen ersten Kriteriums, nämlich bei Auftreten einer einen vorgegebenen Grenzwert überschreitenden Änderung der Leistungsanforderung und/oder der Änderungsrate der Leistungsanforderung, vom ersten Betriebsmodus in den zweiten Betriebsmodus zu wechseln und wobei vorzugsweise vorgesehen ist, dass die Motorsteuerung (4) dazu konfiguriert ist, in Abhängigkeit der Erfüllung eines vorgebbaren zweiten Kriteriums vom zweiten Betriebsmodus in den ersten Betriebsmodus zu wechseln.

3. Brennkraftmaschine nach einem der beiden vorangehenden Ansprüche, wobei die Motorsteuerung (4) dazu konfiguriert ist, im zweiten Betriebsmodus die Abfolge von erster Anzahl (N₁), zweiter Anzahl (N₂) und dritter Anzahl (N₃) von Zyklen der Brennkraftmaschine (1) zu wiederholen.

4. Brennkraftmaschine nach wenigstens einem der vorangehenden Ansprüche, wobei die Motorsteuerung (4) dazu konfiguriert ist, im zweiten Betriebsmodus eine Ansteuerung zumindest eines Aktuators zur Reduktion der von einer Kolben-Zylinder-Einheit (2) mit aktivierter Zündvorrichtung (8) erbrachten Leistung vorzunehmen, bevorzugt indem der Ladedruck im Einlasstrakt (6) gesenkt wird, vorzugsweise durch einen oder mehrere Aktuator(en):
- in Form einer im oder vor dem Einlasstrakt (6) angeordneten Drosselklappe (10), wobei vorzugsweise ein ladedruckabhängiger Grenzwert für eine minimale Schließstellung der Drosselklappe (10) vorgesehen ist und vorgesehen ist, die Drosselklappe (10) so anzusteuern, dass eine Schließstellung der Drosselklappe (10) am oder oberhalb des Grenzwerts verbleibt, und/oder
- in Form eines Umblaseventils (11) eines im oder vor dem Einlasstrakt (6) angeordneten Turboladers (12)

5. Brennkraftmaschine nach wenigstens einem der vorangehenden Ansprüche, wobei die Motorsteuerung (4) dazu konfiguriert ist, im zweiten Betriebsmodus für die dritte Anzahl (N₃) von Zyklen der Brennkraftmaschine (1) keine Reduktion der von einer Kolben-Zylinder-Einheit (2) mit aktivierter Zündvorrichtung (8) erbrachten Leistung vorzunehmen.

6. Brennkraftmaschine nach wenigstens einem der vorangehenden Ansprüche, wobei
- die dritte Anzahl (N₃) der Zyklen der Brennkraftmaschine (1) gleich der ersten Anzahl (N₁) von Zyklen der Brennkraftmaschine (1) ist und/oder
- die zweite Anzahl (N₂) der Zyklen der Brennkraftmaschine (1) kleiner der ersten Anzahl (N₁) und/oder der dritten Anzahl (N₃) von Zyklen der Brennkraftmaschine (1) ist

7. Brennkraftmaschine nach wenigstens einem der vorangehenden Ansprüche, wobei die Motorsteuerung (4) dazu konfiguriert ist, im zweiten Betriebsmodus für die zweite Anzahl (N₂) von Zyklen der Brennkraftmaschine (1):
- alle Zündvorrichtungen (8) zu aktivieren und/oder
- für eine Vielzahl, vorzugsweise für alle, der Kolben-Zylinder-Einheiten (2) mit aktivierter Zündvorrichtung (8) eine Verstellung des Zündzeitpunkts auf spät vorzunehmen

8. Brennkraftmaschine nach wenigstens einem der vorangehenden Ansprüche, wobei das wenigstens eine Signal der Signalerfassungsvorrichtung (9) ein eine Drehzahl (n) der Kurbelwelle (5) repräsentierendes Drehzahlsignal ist.

9. Brennkraftmaschine nach wenigstens einem der vorangehenden Ansprüche, wobei die erste Anzahl (N₁) von Zyklen der Brennkraftmaschine (1) und/oder die zweite Anzahl (N₂) von Zyklen der Brennkraftmaschine (1) und/oder die dritte Anzahl (N₃) von Zyklen der Brennkraftmaschine (1) von dem wenigstens einen Signal der Signalerfassungsvorrichtung (9) abhängig sind.

10. Genset (13), mit:
- einer Brennkraftmaschine (1) nach wenigstens einem der vorangehenden Ansprüche und
- einem mit der Kurbelwelle (5) der Brennkraftmaschine (1) mechanisch gekoppelten elektrischen Generator (14) wobei sich die Leistungsanforderung an die Brennkraftmaschine (1) durch eine mit dem elektrischen Generator (14) verbindbare oder verbundene Last ergibt.

## Claims

1. Internal combustion engine (1) operating in cycles, with:
- a plurality of piston-cylinder units (2), wherein each piston-cylinder unit (2) of the plurality of piston-cylinder units (2) is assigned an ignition device (3), which can be controlled with respect to activation and selection of an ignition timing by an engine control unit (4), wherein, when ignition device (3) is activated, a piston-cylinder unit (2) generates a power, by combustion of a gas-air mixture, which can be transmitted as torque to a crankshaft (5) of the internal combustion engine (1)
- an intake tract (6) and an exhaust tract (7), which are in each case coupled to the plurality of piston-cylinder units (2)
- a supply device (8) for supplying a gas-air mixture under a boost pressure to the intake tract (6)
- a signal detection device (9) for detecting at least one signal, which represents a power demand on the internal combustion engine (1) or from which a power demand on the internal combustion engine (1) can be calculated
- an engine control unit (4) for actuating actuators of the internal combustion engine (1), wherein the at least one signal can be supplied to the engine control unit (4) and the engine control unit (4) is configured, in a first operating mode, in dependence on the currently present power demand for a first number (N1) of cycles of the internal combustion engine (1), to leave so many ignition devices (8) deactivated per cycle of the internal combustion engine (1) that the power of those piston-cylinder units (2) whose ignition devices (8) are activated results in a torque of the crankshaft (5) of the internal combustion engine (1) that is adapted to the currently present power demand
**characterized in that** the engine control unit (4) is configured, in a second operating mode, for reducing a deflagration risk due to unburned gas-air mixture located in the exhaust tract (7),
- after the first number (N₁) of cycles of the internal combustion engine (1), for a second number (N₂) of cycles of the internal combustion engine (1), to allow more piston-cylinder units (2) to generate power per cycle, by activating the assigned ignition devices (8), than would be required in the case of the currently present power demand, wherein the engine control unit (4) is configured, in the second operating mode, to carry out an actuation of at least one actuator for reducing the power generated by a piston-cylinder unit (2) with activated ignition device (8) by carrying out an adjustment of the ignition timing to late at least for at least one of the piston-cylinder units (2) with activated ignition device (8)
- after the second number (N₂) of cycles of the internal combustion engine (1), for a third number (N₃) of cycles of the internal combustion engine (1), in dependence on a currently present power demand, to allow so many piston-cylinder units (2) to generate power per cycle of the internal combustion engine (1), by activating the assigned ignition devices (8), that this results in a torque of the crankshaft (5) that is adapted to the currently present power demand.

2. Internal combustion engine according to the preceding claim, wherein the engine control unit (4) is configured, when a predefined first criterion is met, namely when a change in the power demand and/or in the rate of change of the power demand that exceeds a predefined limit value occurs, to switch from the first operating mode into the second operating mode and wherein it is preferably provided that the engine control unit (4) is configured, in dependence on a predefinable second criterion being met, to switch from the second operating mode into the first operating mode.

3. Internal combustion engine according to one of the two preceding claims, wherein the engine control unit (4) is configured, in the second operating mode, to repeat the sequence of first number (N₁), second number (N₂) and third number (N₃) of cycles of the internal combustion engine (1).

4. Internal combustion engine according to at least one of the preceding claims, wherein the engine control unit (4) is configured, in the second operating mode, to carry out an actuation of at least one actuator for reducing the power generated by a piston-cylinder unit (2) with activated ignition device (8), preferably by lowering the boost pressure in the intake tract (6), preferably using one or more actuator(s):
- in the form of a throttle valve (10) arranged in or before the intake tract (6), wherein, preferably, a boost pressure-dependent limit value is provided for a minimum closed position of the throttle valve (10) and it is provided to actuate the throttle valve (10) such that a closed position of the throttle valve (10) remains at or above the limit value, and/or
- in the form of a bypass valve (11) of a turbocharger (12) arranged in or before the intake tract (6).

5. Internal combustion engine according to at least one of the preceding claims, wherein the engine control unit (4) is configured, in the second operating mode, for the third number (N₃) of cycles of the internal combustion engine (1), not to carry out a reduction of the power generated by a piston-cylinder unit (2) with activated ignition device (8).

6. Internal combustion engine according to at least one of the preceding claims, wherein
- the third number (N₃) of cycles of the internal combustion engine (1) is equal to the first number (N₁) of cycles of the internal combustion engine (1) and/or
- the second number (N₂) of cycles of the internal combustion engine (1) is smaller than the first number (N₁) and/or the third number (N₃) of cycles of the internal combustion engine (1).

7. Internal combustion engine according to at least one of the preceding claims, wherein the engine control unit (4) is configured, in the second operating mode, for the second number (N₂) of cycles of the internal combustion engine (1):
- to activate all ignition devices (8) and/or
- to carry out an adjustment of the ignition timing to late for a plurality, preferably for all, of the piston-cylinder units (2) with activated ignition device (8).

8. Internal combustion engine according to at least one of the preceding claims, wherein the at least one signal of the signal detection device (9) is a rotational speed signal representing a rotational speed (n) of the crankshaft (5).

9. Internal combustion engine according to at least one of the preceding claims, wherein the first number (N₁) of cycles of the internal combustion engine (1) and/or the second number (N₂) of cycles of the internal combustion engine (1) and/or the third number (N₃) of cycles of the internal combustion engine (1) are dependent on the at least one signal of the signal detection device (9).

10. Genset (13), with:
- an internal combustion engine (1) according to at least one of the preceding claims and
- an electrical generator (14) mechanically coupled to the crankshaft (5) of the internal combustion engine (1)
wherein a load connectable or connected to the electrical generator (14) results in the power demand on the internal combustion engine (1).

## Revendications

1. Moteur à combustion interne (1) fonctionnant par cycles, avec :
- une pluralité d'unités de piston-cylindre (2), dans lequel est associé à chaque unité de piston-cylindre (2) de la pluralité des unités de piston-cylindre (2) un dispositif d'allumage (3), lequel peut être commandé en termes d'activation et de choix d'un moment d'allumage par une commande de moteur (4), dans lequel une unité de piston-cylindre (2) fournit, lorsque le dispositif d'allumage (3) est activé, par combustion d'un mélange de gaz et d'air, une puissance, laquelle peut être transmise à un vilebrequin (5) du moteur à combustion interne (1) en tant que couple de rotation,
- un système d'admission (6) et un système de sortie (7), qui sont couplés respectivement à la pluralité d'unités de piston-cylindre (2),
- un dispositif d'amenée (8) destiné à amener au système d'admission (6) un mélange de gaz et d'air se trouvant sous une pression de charge,
- un dispositif de détection de signaux (9) destiné à détecter au moins un signal, lequel représente une demande de puissance au moteur à combustion interne (1) et à partir duquel une demande de puissance au moteur à combustion interne (1) est prévisible,
- une commande de moteur (4) destinée à piloter des actionneurs du moteur à combustion interne (1), dans lequel l'au moins un signal peut être amené à la commande de moteur (4) et la commande de moteur (4) est configurée dans un premier mode de fonctionnement pour désactiver, en fonction de la demande de puissance actuellement présente pour un premier nombre (N₁) de cycles du moteur à combustion interne (1) par cycle du moteur à combustion interne (1) un si grand nombre de dispositifs d'allumage (8) qu'il en résulte, par la puissance des unités de piston-cylindre (2), dont précisément les dispositifs d'allumage (8) sont activés, un couple de rotation du vilebrequin (5) du moteur à combustion interne (1) adapté à la demande de puissance actuellement présente, **caractérisé en ce que** la commande de moteur (4) est configurée pour, dans un deuxième mode de fonctionnement, aux fins de la réduction d'un risque de déflagration en raison du mélange de gaz et d'air non brûlé se trouvant dans le système de sortie (7),
- amener, après le premier nombre (N₁) de cycles du moteur à combustion interne (1) pour un deuxième nombre (N₂) de cycles du moteur à combustion interne (1) par cycle, par activation des dispositifs d'allumage (8) associés, un plus grand nombre d'unités de piston-cylindre (2) à fournir de la puissance que cela ne serait nécessaire pour la demande de puissance actuellement présente, dans lequel la commande de moteur (4) est configurée pour réaliser, dans le deuxième mode de fonctionnement, un pilotage d'au moins un actionneur aux fins de la réduction de la puissance fournie par une unité de piston-cylindre (2) avec un dispositif d'allumage (8) activé **en ce qu'**un report du moment d'allumage est réalisé au moins pour au moins une des unités de piston-cylindre (2) avec un dispositif d'allumage (8) activé,
- amener, après le deuxième nombre (N₂) de cycles du moteur à combustion interne (1) pour un troisième nombre (N₃) de cycles du moteur à combustion interne (1) en fonction d'une demande de puissance actuellement présente par cycle du moteur à combustion interne (1), par activation des dispositifs d'allumage (8) associés, un plus grand nombre d'unités de piston-cylindre (2) de telle sorte qu'il en résulte un couple de rotation du vilebrequin (5) adapté à la demande de puissance actuellement présente.

2. Moteur à combustion interne selon la revendication précédente, dans lequel la commande de moteur (4) est configurée pour passer du premier mode de fonctionnement au deuxième mode de fonctionnement lorsqu'un premier critère prédéfini est respecté, à savoir lors de la survenue d'une modification de la demande de puissance et/ou du taux de modification de la demande de puissance dépassant une valeur limite prédéfinie, et dans lequel il est prévu de préférence que la commande de moteur (4) est configurée pour passer du deuxième mode de fonctionnement au premier mode de fonctionnement en fonction du respect d'un deuxième critère prédéfini.

3. Moteur à combustion interne selon l'une quelconque des deux revendications précédentes, dans lequel la commande de moteur (4) est configurée pour répéter dans le deuxième mode de fonctionnement la séquence du premier nombre (N₁), du deuxième nombre (N₂) et du troisième nombre (N₃) de cycles du moteur à combustion interne (1).

4. Moteur à combustion interne selon au moins l'une quelconque des revendications précédentes, dans lequel la commande de moteur (4) est configurée pour réaliser dans la deuxième mode de fonctionnement un pilotage d'au moins un actionneur aux fins de la réduction de la puissance fournie par une unité de piston-cylindre (2) avec un dispositif d'allumage (8) activé, de manière préférée en ce que la pression de charge est abaissée dans le système d'admission (6), de préférence par un ou plusieurs actionneurs :
- sous la forme d'un papillon (10) disposé dans ou devant le système d'admission (6), dans lequel de préférence une valeur limite dépendant de la pression de charge est prévue pour une position de fermeture minimale du papillon (10) et est prévue pour piloter le papillon (10) de telle sorte qu'une position de fermeture du papillon (10) reste sur ou au-dessus de la valeur limite, et/ou
- sous la forme d'une soupape de recirculation (11) d'un turbocompresseur (12) disposé dans ou devant le système d'admission (6).

5. Moteur à combustion interne selon au moins l'une quelconque des revendications précédentes, dans lequel la commande de moteur (4) est configurée pour ne réaliser, dans le deuxième mode de fonctionnement pour le troisième nombre (N₃) de cycles du moteur à combustion interne (1), aucune réduction de la puissance fournie par une unité de piston-cylindre (2) avec un dispositif d'allumage (8) activé.

6. Moteur à combustion interne selon au moins l'une quelconque des revendications précédentes, dans lequel
- le troisième nombre (N₃) des cycles du moteur à combustion interne (1) est identique au premier nombre (N₁) de cycles du moteur à combustion interne (1), et/ou
- le deuxième nombre (N₂) des cycles du moteur à combustion interne (1) est inférieur au premier nombre (N₁) et/ou au troisième nombre (N₃) de cycles du moteur à combustion interne (1).

7. Moteur à combustion interne selon au moins l'une quelconque des revendications précédentes, dans lequel la commande de moteur (4) est configurée pour, dans le deuxième mode de fonctionnement pour le deuxième nombre (N₂) de cycles du moteur à combustion interne (1) :
- activer tous les dispositifs d'allumage (8), et/ou
- reporter le moment d'allumage pour une pluralité, de préférence pour toutes, les unités de piston-cylindre (2) avec un dispositif d'allumage (8) activé.

8. Moteur à combustion interne selon au moins l'une quelconque des revendications précédentes, dans lequel l'au moins un signal du dispositif de détection de signaux (9) est un signal de vitesse de rotation représentant une vitesse de rotation (n) du vilebrequin (5) .

9. Moteur à combustion interne selon au moins l'une quelconque des revendications précédentes, dans lequel le premier nombre (N₁) de cycles du moteur à combustion interne (1) et/ou le deuxième nombre (N₂) de cycles du moteur à combustion interne (1) et/ou le troisième nombre (N₃) de cycles du moteur à combustion interne (1) dépendent de l'au moins un signal du dispositif de détection de signaux (9).

10. Groupe électrogène (13) avec :
- un moteur à combustion interne (1) selon au moins l'une quelconque des revendications précédentes, et
- un générateur électrique (14) couplé mécaniquement au vilebrequin (5) du moteur à combustion interne (1), dans lequel la demande de puissance au moteur à combustion interne (1) résulte d'une charge pouvant être reliée ou reliée au générateur électrique (14).
